# EUROPEAN PATENT APPLICATION

(11) **EP 4 797 416 A1**
(43) Date of publication of application: **26.08.2026**
(21) Application number: 23957892.5
(22) Date of filing: 06.11.2023
(51) Int. Cl.: H01M 50/367

(54) **BATTERY CELL, BATTERY, AND ELECTRIC DEVICE**

(71) Applicant: Contemporary Amperex Technology Co., Limited, Ningde, Fujian 352100 (CN)
(72) Inventor: KE, Haibo, Ningde, Fujian 352100 (CN); JIN, Haizu, Ningde, Fujian 352100 (CN); LI, Quankun, Ningde, Fujian 352100 (CN); MAO, Guoan, Ningde, Fujian 352100 (CN); CHEN, Xinxiang, Ningde, Fujian 352100 (CN); CHEN, Yanlin, Ningde, Fujian 352100 (CN)
(74) Representative: Ran, Handong
(86) International application number: PCT/CN2023/130015
(87) International publication number: WO 2025/097278

(57) **Abstract**

Embodiments of the present application provide a battery cell, a battery, and an electric device. The battery cell comprises a housing, a pressure relief mechanism, an electrode assembly, and an isolation member. The housing is provided with a first wall. The pressure relief mechanism is arranged in the housing. The electrode assembly is arranged in the housing. The isolation member is arranged between the electrode assembly and the first wall. An exhaust channel is formed in the isolation member, and the exhaust channel is configured to guide gas in a battery cell to the pressure relief mechanism. At least a part of the isolation member is a heat-resistant portion having a melting point greater than 250 degrees Celsius. According to the battery cell, the risk that gas generated by the electrode assembly cannot be guided to the pressure relief mechanism is reduced, improving the reliability of the battery.

## Description

### TECHNICAL FIELD

The present application relates to the technical field of batteries, and in particular, to a battery cell, a battery, and an electric device.

### BACKGROUND

The primary type of battery used in vehicles is the lithium-ion battery. As a rechargeable battery, the lithium-ion battery has advantages such as a small size, a high energy density, a high power density, long cycle life, and long storage time.

A battery cell generally includes a shell body and an electrode assembly, the shell body is configured to accommodate the electrode assembly and an electrolytic solution, the electrode assembly generally includes a positive electrode plate and a negative electrode plate, and electric energy is generated by the movement of metal ions (such as lithium ions) between the positive electrode plate and the negative electrode plate.

For a general battery cell, during use of the battery cell, the electrode assembly generates gas and heat, causing the battery to expand or even explode. Therefore, how to improve the reliability of battery cells is an urgent problem to be solved in battery technologies.

### SUMMARY

Embodiments of the present application provide a battery cell, a battery, and an electric device to improve the reliability of the battery cell.

In a first aspect, the embodiments of the present application provide a battery cell. The battery cell includes a shell, a pressure relief mechanism, an electrode assembly, and a separator. The shell is provided with a first wall. The pressure relief mechanism is disposed on the shell. The electrode assembly is disposed in the shell. The separator is disposed between the electrode assembly and the first wall, the separator is provided with a venting channel, and the venting channel is configured to guide the gas in the battery cell to the pressure relief mechanism. At least a part of the separator is a heat-resistant part with a melting point greater than 250 °C.

In the above technical solution, the separator is disposed between the first wall of the shell and the electrode assembly, and the separator is provided with the venting channel. At the initial stage of thermal runaway of the battery cell, the electrode assembly generates gas and heat, and the gas in the battery cell can be guided to the pressure relief mechanism through the venting channel. In the process of the electrode assembly generating gas and heat, the temperature of the battery cell rises continuously, such that some components in the battery cell melt and are present in a molten state. Since at least a part of the separator is a heat-resistant part with a melting point greater than 250 °C, the heat-resistant part can withstand the high temperature inside the battery cell and remain solid, so as to provide an isolation effect between the electrode assembly and the first wall. In this way, the original venting channel can be maintained between the electrode assembly and the first wall, or a new venting channel can be formed due to the melting of a part of the separator, thus guiding the gas in the battery cell to the pressure relief mechanism. Therefore, the battery cell reduces the risk that the gas in the battery cell cannot be guided to the pressure relief mechanism, and improves the reliability of the battery.

In some embodiments, the entire separator is the heat-resistant part. By configuring the entire separator as the heat-resistant part, when high temperature and high pressure are generated inside the battery cell due to thermal runaway, the separator can maintain the original form, thereby ensuring that the venting channel remains unobstructed, and reducing the risk of explosion and fire of the battery cell caused by the blockage of the venting channel.

In some embodiments, one part of the separator is the heat-resistant part, and the other part of the separator is a non-heat-resistant part with a melting point less than or equal to 250 °C; the heat-resistant part is configured to form a venting gap in communication with the pressure relief mechanism between the electrode assembly and the first wall after the non-heat-resistant part is melted. During the thermal runaway of the battery cell, the non-heat-resistant part may melt under the influence of the high temperature inside the battery cell, and the melted non-heat-resistant part may be led out through the pressure relief mechanism along with the airflow. The heat-resistant part maintains the original form to continue to isolate the electrode assembly from the first wall, and due to the melting of the non-heat-resistant part, the venting gap in communication with the pressure relief mechanism is newly added between the electrode assembly and the first wall, such that the gas in the battery cell can be continuously guided to the pressure relief mechanism to be discharged out of the battery cell.

In some embodiments, a plurality of heat-resistant parts are provided, projections of the plurality of heat-resistant parts are spaced apart from each other in a thickness direction of the first wall, and an edge of the projection of the separator is spaced apart from the projection of each heat-resistant part. By allowing the plurality of heat-resistant parts to be spaced apart from each other in the thickness direction of the first wall, after the non-heat-resistant part of the separator is melted, the venting gap for guiding the gas in the battery cell to the pressure relief mechanism may be formed between the plurality of heat-resistant parts. The edge of the projection of the separator is spaced apart from the projection of each heat-resistant part. If the heat-resistant parts are disposed at the edge of the separator, during the melting of the non-heat-resistant part, the heat-resistant parts are prone to drift to the edge of the electrode assembly, such that the projections of the heat-resistant parts do not overlap with the projection of the electrode assembly in the thickness direction of the first wall, and thereby the electrode assembly becomes in contact with the first wall to block the venting gap, which increases the risk of explosion and fire of the battery cell.

In some embodiments, the projection area of the heat-resistant part is smaller than the projection area of the separator in the thickness direction of the first wall. After the non-heat-resistant part of the separator is heated and melted, the region where the non-heat-resistant part previously occupies before being melted forms a new venting gap between the electrode assembly and the first wall. The projection area of the heat-resistant part is smaller than the projection area of the separator in the thickness direction of the first wall, such that the projection area of the venting gap is increased, which is more conducive to the flow of the gas in the battery cell to the pressure relief mechanism.

In some embodiments, the projection area of the heat-resistant part is S₁, the projection area of the separator is S₂, and 0.2 ≤ S₁/S₂ ≤ 0.8 is satisfied. In the case that S₁/S₂ ≥ 0.2, the supporting effect of the heat-resistant part on the electrode assembly can be improved, and the risk of the heat-resistant part penetrating into the electrode assembly due to a small volume can be reduced. When S₁/S₂ ≤ 0.8, the venting gap formed between the electrode assembly and the first wall is not too small, and the venting efficiency of the venting gap is improved. In this way, the supporting capacity and the venting capacity of the separator are balanced.

In some embodiments, in the thickness direction of the first wall, the thickness of the heat-resistant part is L₁, the thickness of the separator is L₂, and 0.2 ≤ L₁/L₂ ≤ 0.8 is satisfied. In the case that L₁/L₂ ≥ 0.2, after the non-heat-resistant part of the separator is melted, the heat-resistant part can prevent the venting gap formed between the electrode assembly and the first wall from being too small, thereby improving the venting efficiency of the venting gap; L₁/L₂ ≤ 0.8 reduces the usage amount of the heat-resistant part, and the cost is saved, thereby balancing the venting capacity and economy of the separator.

In some embodiments, the shell is further provided with a second wall adjacent to the first wall, the separator is plate-shaped, and a first gap is formed between the edge of the separator and an inner surface of the second wall; the venting channel includes a first venting channel, the first venting channel extends to the edge of the separator, and the first venting channel is in communication with the first gap. By providing the first gap, the gas in the battery cell can flow to the first venting channel through the first gap, such that the gas can be guided to the pressure relief mechanism to be discharged out of the shell.

In some embodiments, the separator includes a body and a protrusion, the body has a first surface facing the first wall, and the protrusion protrudes from the first surface, such that a second gap of the first venting channel is formed between the first surface and the first wall. By disposing the protrusion between the body and the first wall, the protrusion separates the body from the first wall to maintain the second gap, and the first gap is in communication with the first gap, such that the gas in the battery cell can be guided to the second gap through the first gap and then flows to the pressure relief mechanism.

In some embodiments, the projection of the protrusion does not overlap with the projection of the pressure relief mechanism in the thickness direction of the first wall. By allowing the projection of the protrusion not to overlap with the projection of the pressure relief mechanism in the thickness direction of the first wall, when the pressure relief mechanism is located on the first wall, such a design facilitates effective support of the separator by the first wall while the separator supports the electrode assembly, thereby reducing the risk of affecting the normal operation of the pressure relief mechanism due to the separator abutting against the pressure relief mechanism. The design that the protrusion does not overlap with the pressure relief mechanism helps to reduce the risk of affecting the venting effect due to the blockage of the venting port of the pressure relief mechanism by the protrusion.

In some embodiments, the separator includes a body and a protrusion, the body has a second surface facing the electrode assembly, and the protrusion protrudes from the second surface, such that a third gap serving as the first venting channel is formed between the second surface and the electrode assembly. By disposing the protrusion between the electrode assembly and the body, the third gap is located between the electrode assembly and the body. In this way, gas on a side of the electrode assembly facing the body may be directly guided to the pressure relief mechanism through the third gap, thus establishing a flow path of gas.

In some embodiments, a plurality of protrusions are provided, and the plurality of protrusions are spaced apart from each other. By providing the plurality of protrusions, the separator is more stably disposed between the first wall and the electrode assembly, and the separator may support the electrode assembly to make the electrode assembly more stable in the shell.

In some embodiments, at least a part of the protrusion is the heat-resistant part. During the process of the gas in the battery cell passing through the venting channel, the protrusion may maintain the isolation between the electrode assembly and the first wall, thereby ensuring that the venting channel is unobstructed and is of a certain size.

In some embodiments, the melting point of the heat-resistant part is higher than the melting point of the body. On the premise that at least a part of the protrusion is the heat-resistant part, the melting point of the heat-resistant part of the heat-resistant part is higher than the melting point of the body, such that the protrusion can maintain the isolation between the electrode assembly and the first wall before the body melts, thereby reducing the risk of affecting the normal venting of the venting channel due to disappearance of the second gap or the third gap caused by the melting of the protrusion before the body.

In some embodiments, the entire protrusion is the heat-resistant part. By configuring the entire protrusion as the heat-resistant part, the protrusion can maintain the original height of the second gap or the third gap in the thickness direction of the first wall, thereby ensuring that the venting channel is unobstructed.

In some embodiments, one part of the protrusion is the heat-resistant part, and the other part is integrally formed with the body and wraps the heat-resistant part. By allowing a part of the protrusion to be integrally formed with the body and wrap the heat-resistant part of the protrusion, the connection between the protrusion and the body is more stable.

In some embodiments, a part of the body is the heat-resistant part. Such a design helps to form a new venting gap by the heat-resistant part of the body after the non-heat-resistant part of the body is melted, such that the gas in the battery cell can be continuously guided to the pressure relief mechanism.

In some embodiments, the body is made of an insulating material. Such a design helps to insulate and isolate the electrode assembly from the shell.

In some embodiments, the venting channel further includes a through hole disposed on the body, and the through hole is connected to the first venting channel. By disposing the through hole on the body, the gas generated by the electrode assembly can be guided to the first venting channel through the through hole and thereby to be in communication with the pressure relief mechanism. This increases the path for gas flow.

In some embodiments, the pressure relief mechanism is disposed on the first wall. By disposing the pressure relief mechanism on the first wall, the separator is located between the electrode assembly and the pressure relief mechanism. In the case of thermal runaway, the heat-resistant part of the separator maintains a gap between the pressure relief mechanism and the electrode assembly, thereby providing a channel for guiding the gas in the battery cell to the pressure relief mechanism.

In some embodiments, the battery cell includes an electrode terminal, the shell is provided with a second wall adjacent to the first wall, and the electrode terminal is disposed on the second wall. By disposing the electrode terminal adjacent to the pressure relief mechanism, the influence of the pressure relief mechanism on the electrode terminal during pressure relief is reduced.

In some embodiments, the battery cell includes an electrode terminal, the shell is provided with a third wall opposite to the first wall, and the electrode terminal is disposed on the third wall. By disposing the electrode terminal opposite to the pressure relief mechanism, the influence of the pressure relief mechanism on the electrode terminal during pressure relief is reduced.

In some embodiments, the first wall is oriented downward when the battery cell is placed in an electric device or a battery. By orienting the pressure relief mechanism downward, the pressure relief mechanism vents gas downward, which reduces the influence of pressure relief of the pressure relief mechanism on other components located above the pressure relief mechanism when the battery cell is applied to the electric device or the battery.

In some embodiments, the shell includes a shell body and an end cover, the shell body includes a bottom wall and a side wall, the side wall is disposed in an enclosing manner around the bottom wall, one end of the side wall is connected to the bottom wall, the other end of the side wall forms an opening, the opening is lidded with the end cover, and the first wall is the bottom wall. By disposing the separator between the electrode assembly and the first wall serving as the bottom wall, the separator can maintain the support for the electrode assembly. In the case of thermal runaway, the heat-resistant part of the separator can maintain the support for the electrode assembly, thereby providing a channel for guiding the gas to the pressure relief mechanism.

In some embodiments, the heat-resistant part is made of metal, ceramic, mica, polyimide, or soluble polytetrafluoroethylene.

In a second aspect, the present application provides a battery. The battery includes a plurality of battery cells according to any one of the embodiments of the first aspect.

In a third aspect, the embodiments of the present application provide an electric device. The electric device includes a plurality of battery cells according to any one of the embodiments of the first aspect or the battery according to the embodiments of the second aspect, where the battery cells or the battery are configured to provide electric energy.

### BRIEF DESCRIPTION OF THE DRAWINGS

To more clearly illustrate the technical solutions according to embodiments of the present application, the drawings required for illustrating the embodiments of the present application are briefly described below. Apparently, the drawings in the following description illustrate merely some embodiments of the present application, and those of ordinary skill in the art may still derive other drawings from these drawings without creative efforts.
FIG. 1 is a schematic structural diagram of a vehicle according to some embodiments of the present application;
FIG. 2 is an exploded view of a battery according to some embodiments of the present application;
FIG. 3 is an exploded view of a battery cell according to some embodiments of the present application;
FIG. 4 is a cross-sectional view of a battery cell;
FIG. 5 is a partially enlarged view of region A in FIG. 4;
FIG. 6 is a schematic structural diagram of a separator in FIG. 4;
FIG. 7 is a schematic structural diagram of the battery cell (after a non-heat-resistant part is melted) shown in FIG. 5;
FIG. 8 is a partially enlarged view of region B in FIG. 4;
FIG. 9 is a partial schematic diagram of a battery cell according to some embodiments of the present application;
FIG. 10 is a schematic structural diagram of a separator in FIG. 9;
FIG. 11 is a partial schematic diagram of a battery cell according to yet some other embodiments of the present application;
FIG. 12 is a schematic structural diagram of a separator according to some embodiments of the present application;
FIG. 13 is a cross-sectional view of the separator in FIG. 10 along line A-A;
FIG. 14 is a partially enlarged view of region C in FIG. 13;
FIG. 15 is a partial schematic diagram of a separator according to some embodiments of the present application;
FIG. 16 is a partial schematic diagram of a separator according to yet some other embodiments of the present application;
FIG. 17 is a schematic structural diagram of a separator according to yet some other embodiments of the present application;
FIG. 18 is a schematic structural diagram of a battery cell according to still some other embodiments of the present application; and
FIG. 19 is a schematic structural diagram of a shell according to some embodiments of the present application.

The drawings are not drawn to scale.

Description of the reference numerals: 1-shell; 11-shell body; 111-first wall; 112-second wall; 113-third wall; 12-end cover; 1a-opening; 2-electrode assembly; 21-tab; 3-electrode terminal; 4-first insulating member; 5-second insulating member; 6-pressure relief mechanism; 7-separator; 711-heat-resistant part; 712-non-heat-resistant part; 721-body; 7211-first surface; 7212-second surface; 722-protrusion; 7221-connecting part; 8-venting channel; 81-first venting channel; 811-second gap; 812-third gap; 91-venting gap; 92-first gap; 93-through hole; 10-battery cell; 20-case; 201-first portion; 202-second portion; 100-battery; 200-controller; 300-motor; 1000-vehicle.

### DETAILED DESCRIPTION

To make the objectives, technical solutions, and advantages of embodiments of the present application clearer, the technical solutions in the embodiments of the present application will be clearly described hereinafter with reference to the drawings in the embodiments of the present application. It is apparent that the described embodiments are some, but not all, embodiments of the present application. Based on the embodiments in the present application, all other embodiments obtained by those of ordinary skill in the art without creative efforts shall fall within the protection scope of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "provided with", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the present application, the term "and/or" is merely a way to describe the association relationship between associated objects and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device are only exemplary and should not be construed as limiting the present application in any way.

The term "plurality of" used in the present application refers to no less than two (including two).

In the embodiments of the present application, the battery cell may be a secondary battery. The secondary battery refers to a battery cell that can be reused by activating the active material through charging after the battery cell is discharged.

The battery cell includes, but is not limited to, a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, and the like.

The battery cell generally includes an electrode assembly. The electrode assembly includes a positive electrode, a negative electrode, and a separation component. During the charging and discharging process of the battery cell, active ions (such as lithium ions) are intercalated and deintercalated back and forth between the positive electrode and the negative electrode. The separation component is disposed between the positive electrode and the negative electrode, which can reduce the risk of a short circuit between the positive electrode and the negative electrode while allowing the passage of active ions.

In some embodiments, the positive electrode may be a positive electrode plate, and the positive electrode plate may include a positive electrode current collector and a positive electrode active material disposed on at least one surface of the positive electrode current collector.

As an example, the positive electrode current collector has two surfaces opposite to each other in its own thickness direction, and the positive electrode active material is disposed on either or both of the two opposite surfaces of the positive electrode current collector.

As an example, a metal foil or a composite current collector may be used as the positive electrode current collector. For example, for the metal foil, aluminum treated with silver on the surface, stainless steel treated with silver on the surface, stainless steel, copper, aluminum, nickel, carbon electrode, carbon, nickel, titanium, or the like may be used. The composite current collector may include a polymer material base layer and a metal layer. The composite current collector may be fabricated by forming a metal material (aluminum, an aluminum alloy, nickel, a nickel alloy, titanium, a titanium alloy, silver, a silver alloy, or the like) on a polymer material substrate (such as a substrate made of polypropylene, polyethylene terephthalate, polybutylene terephthalate, polystyrene, and polyethylene).

As an example, the positive electrode active material may include at least one of the following materials: a lithium-containing phosphate, a lithium transition metal oxide, and respective modified compounds thereof. However, the present application is not limited to these materials, and other conventional materials that can be used as positive electrode active materials for batteries may also be used. These positive electrode active materials may be used alone or in combination of two or more. Examples of the lithium-containing phosphate may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon. Examples of the lithium transition metal oxide may include, but are not limited to, at least one of a lithium cobalt oxide (such as LiCoO₂), a lithium nickel oxide (such as LiNiO₂), a lithium manganese oxide (such as LiMnO₂ or LiMn₂O₄), a lithium nickel cobalt oxide, a lithium manganese cobalt oxide, a lithium nickel manganese oxide, a lithium nickel cobalt manganese oxide (such as LiNi1/3Co1/3Mn1/3O₂ (also referred to as NCM333), LiNi_{0.5}Co_{0.2}Mn_{0.3}O₂ (also referred to as NCM523), LiNi_{0.5}Co_{0.25}Mn_{0.25}O₂ (also referred to as NCM211), LiNi_{0.6}Co_{0.2}Mn_{0.2}O₂ (also referred to as NCM622), LiNi_{0.8}Co_{0.1}Mn_{0.1}O₂ (also referred to as NCM811)), a lithium nickel cobalt aluminum oxide (such as LiNi_{0.85}Co_{0.15}Al_{0.05}O₂), and modified compounds thereof.

In some embodiments, a foam metal may be used as the positive electrode. The foam metal may be foam nickel, foam copper, foam aluminum, a foam alloy, foam carbon, or the like. When the foam metal is used as the positive electrode, the surface of the foam metal may not be provided with the positive electrode active material. Certainly, the positive electrode active material may also be provided. As an example, a lithium source material, a potassium metal, or a sodium metal may also be incorporated into or/and deposited in the foam metal; the lithium source material is a lithium metal and/or a lithium-rich material.

In some embodiments, the negative electrode may be a negative electrode plate, and the negative electrode plate may include a negative electrode current collector.

As an example, a metal foil, a foam metal, or a composite current collector may be used as the negative electrode current collector. For example, for the metal foil, aluminum or stainless steel treated with silver on the surface, stainless steel, copper, aluminum, nickel, carbon electrode, carbon, nickel, titanium, or the like may be used. The foam metal may be foam nickel, foam copper, foam aluminum, a foam alloy, or the like. The composite current collector may include a polymer material base layer and a metal layer. The composite current collector may be fabricated by forming a metal material (copper, a copper alloy, nickel, a nickel alloy, titanium, a titanium alloy, silver, a silver alloy, or the like) on a polymer material substrate (such as a substrate made of polypropylene, polyethylene terephthalate, polybutylene terephthalate, polystyrene, and polyethylene).

As an example, the negative electrode plate may include a negative electrode current collector and a negative electrode active material disposed on at least one surface of the negative electrode current collector.

As an example, the negative electrode current collector has two surfaces opposite to each other in its own thickness direction, and the negative electrode active material is disposed on either or both of the two opposite surfaces of the negative electrode current collector.

As an example, the negative electrode active material may be a negative electrode active material known in the art for use in battery cells. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials that can be used as negative electrode active materials for batteries may also be used. These negative electrode active materials may be used alone or in a combination of two or more.

In some embodiments, the material of the positive electrode current collector may be aluminum, and the material of the negative electrode current collector may be copper.

In some embodiments, the separation component is a separation film. For the separation film, any porous-structure separation film known to have good chemical stability and mechanical stability may be selected and used.

As an example, the material of the separation film may include at least one of glass fiber, non-woven fabric, polyethylene, polypropylene, and polyvinylidene fluoride. The separation film may be a single-layer film or a multi-layer composite film. When the separation film is a multi-layer composite film, the materials of the layers may be the same or different. The separation component may be a separate component located between the positive electrode and the negative electrode, or may be attached to the surfaces of the positive electrode and the negative electrode.

In some embodiments, the separation component is a solid-state electrolyte. The solid-state electrolyte is disposed between the positive electrode and the negative electrode, serving both to transport ions and to isolate the positive electrode and the negative electrode.

In some embodiments, the battery cell further includes an electrolyte that serves to conduct ions between the positive electrode and the negative electrode. The electrolyte may be liquid-state, gel-state, or solid-state. The liquid-state electrolyte includes an electrolyte salt and a solvent.

In some embodiments, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone. The solvent may also be selected from an ether solvent. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyl tetrahydrofuran, diphenyl ether, and crown ether.

The gel-state electrolyte includes a skeleton network with a polymer as an electrolyte, combined with an ionic liquid-lithium salt.

The solid-state electrolyte includes a polymer solid-state electrolyte, an inorganic solid-state electrolyte, and a composite solid-state electrolyte.

As an example, the polymer solid-state electrolyte may be polyether (polyethylene oxide), polysiloxane, polycarbonate, polyacrylonitrile, polyvinylidene fluoride, polymethyl methacrylate, single-ion polymer, polyionic liquid-lithium salt, cellulose, or the like.

As an example, the inorganic solid-state electrolyte may include one or more of an oxide solid electrolyte (crystalline perovskite, sodium superionic conductor, garnet, and amorphous LiPON thin film), a sulfide solid electrolyte (crystalline lithium superionic conductor (lithium germanium phosphorus sulfur or argyrodite), and amorphous sulfide), a halide solid electrolyte, a nitride solid electrolyte, and a hydride solid electrolyte.

As an example, the composite solid-state electrolyte is formed by adding an inorganic solid-state electrolyte filler to the polymer solid electrolyte.

In some embodiments, the electrode assembly is of a wound structure. The positive electrode plate and the negative electrode plate are wound to form a wound structure.

In some embodiments, the electrode assembly is of a stacked structure.

As an example, a plurality of positive electrode plates and a plurality of negative electrode plates may be provided, and the plurality of positive electrode plates and the plurality of negative electrode plates are alternately stacked.

As an example, a plurality of positive electrode plates may be provided, and the negative electrode plate is folded to form a plurality of stacked folded segments, with one positive electrode plate sandwiched between adjacent folded segments.

As an example, the positive electrode plate and the negative electrode plate are both folded to form a plurality of stacked folded segments.

As an example, a plurality of separation components may be provided, and are separately disposed between any adjacent positive electrode plates or negative electrode plates.

As an example, the separation component may be provided in a continuous manner, and is disposed between any adjacent positive electrode plates or negative electrode plates by means of folding or winding.

In some embodiments, the shape of the electrode assembly may be cylindrical, flat, multi-prismatic, or the like.

In some embodiments, the electrode assembly is provided with tabs that can conduct current out from the electrode assembly. The tabs include a positive electrode tab and a negative electrode tab.

In some embodiments, the battery cell may include a shell. The shell is configured to encapsulate components such as the electrode assembly and the electrolyte. The shell may be a steel shell, an aluminum shell, a plastic shell (such as polypropylene), a composite metal shell (such as a copper-aluminum composite shell), an aluminum-plastic film, or the like.

As an example, the battery cell may be a cylindrical battery cell, a prismatic battery cell, a pouch battery cell, or a battery cell of other shapes. The prismatic battery cell includes a square-shell battery cell, a blade-shaped battery cell, and a multi-prismatic battery, and the multi-prismatic battery is, for example, a hexagonal prismatic battery.

The battery mentioned in the embodiments of the present application refers to a single physical module including one or a plurality of battery cells to provide higher voltage and capacity.

In some embodiments, the battery may be a battery module, and when a plurality of battery cells are provided, the plurality of battery cells are arranged and fixed to form one battery module.

In some embodiments, the battery may be a battery pack. The battery pack includes a case and a battery cell, and the battery cell or the battery module is accommodated in the case.

In some embodiments, the case may be a part of the chassis structure of the vehicle. For example, a part of the case may become at least a part of the floor of the vehicle, or a part of the case may become at least a part of a crossmember and a longitudinal member of the vehicle.

In some embodiments, the battery may be an energy storage device. The energy storage device includes an energy storage container, an energy storage electrical cabinet, and the like.

Battery technology advancement requires consideration of various design factors at the same time, such as energy density, cycle life, discharge capacity, charging and discharging rate, and other performance parameters. In addition, the reliability of the battery also needs to be considered.

In order to improve the reliability of the battery cell, a pressure relief mechanism may be disposed on the shell of the battery cell, and when the battery cell undergoes thermal runaway, the pressure inside the battery cell is relieved through the pressure relief mechanism. In order to improve the insulating property between the electrode assembly and the shell, a separator may be disposed between the electrode assembly and the shell. After the separator is disposed in the battery cell, in order to improve the timeliness of pressure relief of the pressure relief mechanism, a venting channel may be disposed on the separator.

In a general battery cell, when the battery cell undergoes thermal runaway, the temperature in the battery cell is high. After the separator is melted, the venting channel would be easily blocked and thus the gas in the battery cell cannot flow to the pressure relief mechanism, such that the pressure and temperature in the battery cell cannot be released in time, which increases the risk of explosion and fire of the battery.

In view of this, the embodiments of the present application provide a battery cell, in which a heat-resistant part is configured in a separator between an electrode assembly and a shell, the melting point of the heat-resistant part is set to be greater than 250 °C and thus the heat-resistant part has a certain heat-resistant capacity in a high-temperature environment, and the heat-resistant part is maintained between the electrode assembly and the shell in the high-temperature environment, so as to provide a venting channel for guiding the gas generated by the electrode assembly to a pressure relief mechanism, thereby reducing the risk of explosion and fire of the battery cell and improving the reliability of the battery cell.

The battery cell described in the embodiments of the present application is applicable to a battery and an electric device using a battery cell.

The electric device may be a vehicle, a mobile phone, a portable device, a laptop computer, a ship, a spacecraft, an electric toy, an electric tool, or the like. The vehicle may be a fuel-powered vehicle, a natural gas-powered vehicle, or a new energy vehicle, and the new energy vehicle may be a pure electric vehicle, a hybrid electric vehicle, an extended-range vehicle, or the like; the spacecraft includes an airplane, a rocket, a space shuttle, a spaceship, and the like; the electric toy includes a stationary or mobile electric toy, such as a game console, an electric car toy, an electric ship toy, and an electric airplane toy; the electric tool includes an electric metal cutting tool, an electric grinding tool, an electric assembling tool, and an electric tool for railways, such as an electric drill, an electric grinder, an electric wrench, an electric screwdriver, an electric hammer, an electric impact drill, a concrete vibrator, and an electric planer.

For ease of explanation, the following embodiments will be described by taking a vehicle as an example of the electric device.

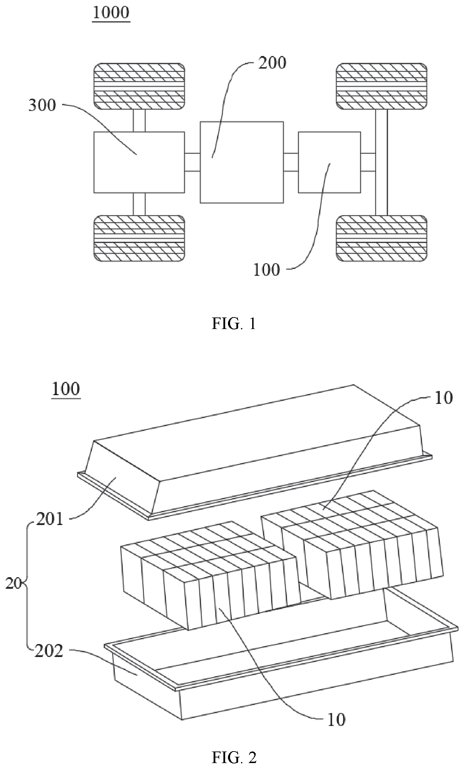

Referring to FIG. 1, FIG. 1 is a schematic structural diagram of a vehicle 1000 according to some embodiments of the present application. A battery 100 is disposed inside the vehicle 1000, and the battery 100 may be disposed at the bottom, head, or tail of the vehicle 1000. The battery 100 may be configured to power the vehicle 1000. For example, the battery 100 may serve as an operation power source for the vehicle 1000.

The vehicle 1000 may further include a controller 200 and a motor 300. The controller 200 is configured to control the battery 100 to power the motor 300, e.g., for the operation power needed by the vehicle 1000 for start-up, navigation, and driving.

In some embodiments of the present application, the battery 100 may not only serve as the operation power source for the vehicle 1000, but also as a driving power source for the vehicle 1000 to, replacing or partially replacing fuel or natural gas, provide driving power for the vehicle 1000.

Referring to FIG. 2, FIG. 2 is an exploded view of a battery 100 according to some embodiments of the present application. The battery 100 includes a case 20 and a battery cell 10. The case 20 is configured to accommodate the battery cell 10.

The case 20 is a component for accommodating the battery cell 10, the case 20 provides an accommodating space for the battery cell 10, and the case 20 may be of various structures. In some embodiments, the case 20 may include a first portion 201 and a second portion 202. The first portion 201 and the second portion 202 are mutually lidded with each other to define the accommodating space for accommodating the battery cell 10. The first portion 201 and the second portion 202 may be in various shapes, such as a rectangular parallelepiped and a cylinder. The first portion 201 may be of a hollow structure with one side open, the second portion 202 may also be of a hollow structure with one side open, and the open side of the first portion 201 is lidded with the open side of the second portion 202 to form the case 20 having the accommodating space. Alternatively, the first portion 201 may be of a hollow structure with one side open, the second portion 202 may be of a plate-shaped structure, and the open side of the first portion 201 is lidded with the second portion 202 to form the case 20 having the accommodating space. The first portion 201 and the second portion 202 may be sealed by using a sealing element. The sealing element may be a seal ring, a sealant, or the like.

In the battery 100, one or a plurality of battery cells 10 may be provided. If a plurality of battery cells 10 are provided, the plurality of battery cells 10 may be connected in series, in parallel, or in series-parallel. The series-parallel connection means that both series connection and parallel connection are present in the connection of the plurality of battery cells 10. The situation may be that the plurality of battery cells 10 are first connected in series, in parallel, or in series-parallel to form battery modules, and then the plurality of battery modules are connected in series, in parallel, or in series-parallel to form a whole to be accommodated in the case 20. Alternatively, all the battery cells 10 may be directly connected in series, in parallel, or in series-parallel, and then the whole formed by all the battery cells 10 is accommodated in the case 20.

In some embodiments, the battery 100 may further include a busbar component. The plurality of battery cells 10 may be electrically connected to each other through the busbar component to achieve series connection, parallel connection, or series-parallel connection among the plurality of battery cells 10. The busbar component may be a metal conductor, such as copper, iron, aluminum, stainless steel, or an aluminum alloy.

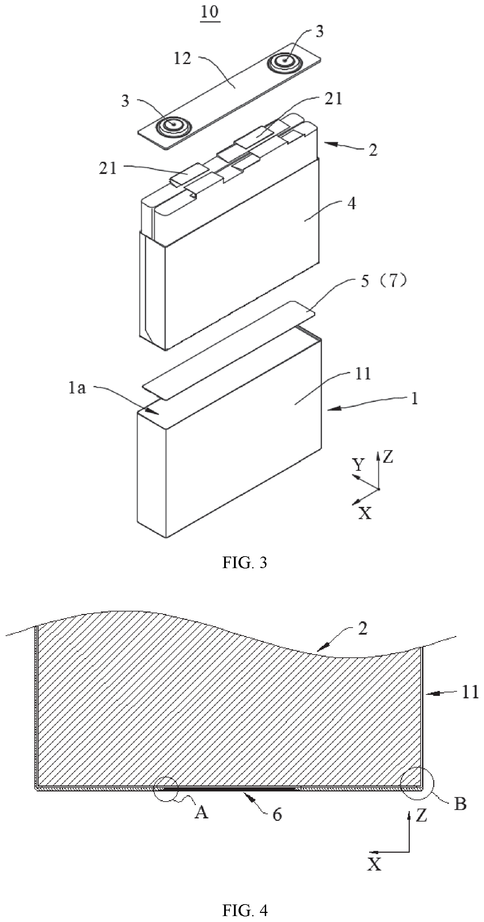

Referring to FIG. 3, FIG. 3 is an exploded view of a battery cell 10 according to some embodiments of the present application. The battery cell 10 may include a shell 1 and an electrode assembly 2. The electrode assembly 2 is accommodated in the shell 1.

In some embodiments, the shell 1 may include a shell body 11 and an end cover 12. The shell body 11 has an opening 1a, and the end cover 12 closes the opening 1a of the shell body 11.

The shell body 11 is a component for accommodating the electrode assembly 2. The shell body 11 may be of a hollow structure with the opening 1a formed at one end, and the shell body 11 may be of a hollow structure with openings 1a formed at two opposite ends. The shell body 11 may be in various shapes, such as a cylinder shape and a rectangular parallelepiped shape. The shell body 11 may be made of various materials, such as copper, iron, aluminum, steel, and an aluminum alloy.

The end cover 12 is a component that closes the opening 1a of the shell body 11 to isolate the internal environment of the battery cell 10 from the external environment. The end cover 12 and the shell body 11 jointly define an accommodating space for accommodating the electrode assembly 2, an electrolytic solution, and other components. The end cover 12 may be connected to the shell body 11 by welding or crimping to close the opening 1a of the shell body 11. The shape of the end cover 12 may be adapted to the shape of the shell body 11. For example, the shell body 11 is of a rectangular parallelepiped structure, and the end cover 12 is of a rectangular plate-shaped structure adapted to the shell body 11. For another example, the shell body 11 is of a cylindrical structure, and the end cover 12 is of a circular plate-shaped structure adapted to the shell body 11. The end cover 12 may also be made of various materials, such as copper, iron, aluminum, steel, an aluminum alloy, and plastic. The end cover 12 and the shell body 11 may be made of the same or different materials.

In an embodiment in which an opening 1a is formed at one end of the shell body 11, one end cover 12 may be correspondingly provided. In an embodiment in which openings 1a are formed at two opposite ends of the shell body 11, two end covers 12 may be correspondingly provided. The two end covers 12 respectively close the two openings 1a of the shell body 11, and the two end covers 12 and the shell body 11 jointly define the accommodating space.

In some embodiments, the battery cell 10 may further include an electrode terminal 3. The electrode terminal 3 is disposed on the shell 1, and the electrode terminal 3 is configured to be electrically connected to a tab 21 of the electrode assembly 2 to output electric energy of the battery cell 10. The electrode terminal 3 may be disposed on the shell body 11 of the shell 1 or may be disposed on the end cover 12 of the shell 1. The electrode terminal 3 and the tab 21 may be directly connected. For example, the electrode terminal 3 is welded to the tab 21. The electrode terminal 3 and the tab 21 may also be indirectly connected. For example, the electrode terminal 3 and the tab 21 are indirectly connected through a current collecting member. The current collecting member may be a metal conductor, such as copper, iron, aluminum, steel, or an aluminum alloy.

As an example, as shown in FIG. 3, an opening 1a is formed at one end of the shell body 11, there is one end cover 12 in the shell 1, and the one end cover 12 closes one opening 1a of the shell body 11. The end cover 12 is provided with two electrode terminals 3, and the two electrode terminals 3 are a positive electrode terminal and a negative electrode terminal. A positive electrode tab and a negative electrode tab are formed at one end of the electrode assembly 2 facing the end cover 12. The positive electrode terminal and the positive electrode tab are connected through one current collecting member, and the negative electrode terminal and the negative electrode tab are connected through another current collecting member.

In some embodiments, with continued reference to FIG. 3, the battery cell 10 may further include a first insulating member 4. The first insulating member 4 is a component that separates the shell body 11 from the electrode assembly 2, and the insulation and isolation of the shell body 11 from the electrode assembly 2 are achieved through the first insulating member 4. The first insulating member 4 is made of an insulating material, and the material of the first insulating member 4 includes, but is not limited to, plastic, rubber, and the like.

As an example, the first insulating member 4 wraps around the outer side of the electrode assembly 2 along the circumferential direction of the opening 1a of the shell body 11. One or a plurality of electrode assemblies 2 may be provided in the shell 1. If one electrode assembly 2 is provided, the first insulating member 4 wraps around the electrode assembly 2. If a plurality of electrode assemblies 2 are provided, the plurality of electrode assemblies 2 may be stacked in a thickness direction X of the electrode assembly 2. The situation may be that one electrode assembly 2 is correspondingly provided with one first insulating member 4, and each first insulating member 4 wraps around one electrode assembly 2, or that the plurality of electrode assemblies 2 are used as an integral component, and the first insulating member 4 wraps around the integral component.

In some embodiments, a second insulating member 5 may be further included, and the second insulating member 5 may be disposed on a side of the electrode assembly 2 facing away from the tab 21.

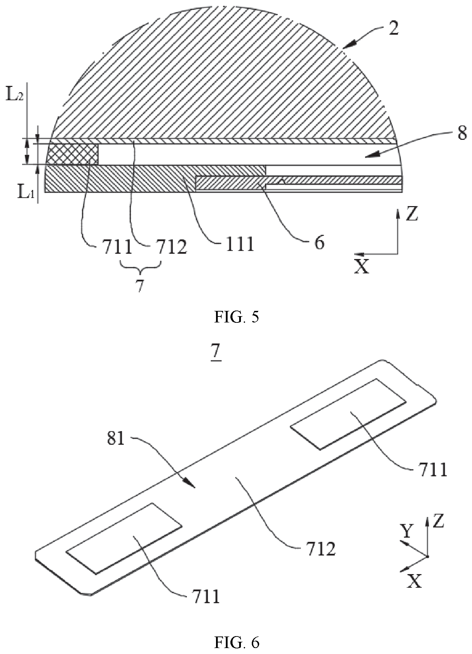

According to some embodiments of the present application, referring to FIGs. 3 to 6, FIG. 4 is a partial cross-sectional view of a battery cell 10, FIG. 5 is a partially enlarged view of region A in FIG. 4, and FIG. 6 is a schematic structural diagram of a separator 7 in FIG. 4. The present application provides a battery cell 10. The battery cell 10 includes a shell 1, a pressure relief mechanism 6, an electrode assembly 2, and a separator 7. The shell 1 is provided with a first wall 111. The pressure relief mechanism 6 is disposed on the shell 1. The electrode assembly 2 is disposed in the shell 1. The separator 7 is disposed between the electrode assembly 2 and the first wall 111, the separator 7 is provided with a venting channel 8, and the venting channel 8 is configured to guide the gas in the battery cell 10 to the pressure relief mechanism 6. At least a part of the separator 7 is a heat-resistant part 711 with a melting point greater than 250 °C.

The pressure relief mechanism 6 is a component for relieving the pressure inside the battery cell 10. When the pressure or temperature inside the battery cell 10 reaches a threshold, the pressure inside the battery cell 10 is relieved through the pressure relief mechanism 6. The pressure relief mechanism 6 may be disposed on the first wall 111, or the pressure relief mechanism 6 may also be disposed on a wall adjacent to or opposite to the first wall 111. The pressure relief mechanism 6 and the wall where the pressure relief mechanism is located may be integrally formed. For example, a score groove may be provided on a wall of the shell 1 to form the pressure relief mechanism 6 in a region of the wall corresponding to the score groove. The pressure relief mechanism 6 may also be disposed separately from the wall where the pressure relief mechanism is located. For example, a pressure relief hole is provided on a wall of the shell 1, and the pressure relief mechanism 6 is mounted on the wall and covers the pressure relief hole. The pressure relief mechanism 6 may be an anti-explosion sheet, a pressure relief valve, a mounting valve, or the like mounted on the shell 1.

One or a plurality of first walls 111 may be provided in the shell 1. The situation may be that the end cover 12 is the first wall 111, or that at least one wall of the shell body 11 is the first wall 111. Taking the case where the first wall 111 is located on the shell body 11 and the shell body 11 is in a rectangular parallelepiped shape as an example, the first wall 111 may be a wall of the shell body 11 in a width direction, a wall of the shell body 11 in a thickness direction, or a wall of the shell body 11 in a height direction, and at least one end of the shell body 11 in the height direction is provided with an opening 1a. As an example, in FIG. 4, the first wall 111 is the wall of the shell body 11 in the height direction. In FIG. 3, the direction X is the width direction of the battery cell 10, the direction Y is the thickness direction of the battery cell 10, and the direction Z is the height direction of the battery cell 10.

The separator 7 is a component that separates the electrode assembly 2 from the first wall 111. The separator 7 may be made of an insulating material for achieving insulation between the electrode assembly 2 and the first wall 111. The separator 7 may also be made of a non-insulating material, such as aluminum or copper. In some embodiments, the separator 7 may be partially located between the electrode assembly 2 and the first wall 111 in the thickness direction of the first wall 111. For example, the separator 7 wraps around the electrode assembly 2. In this case, only a part of the separator 7 is located between the electrode assembly 2 and the first wall 111, and as an example, the first insulating member 4 serves as the separator 7. In some other embodiments, the separator 7 is entirely located between the electrode assembly 2 and the first wall 111 in the thickness direction of the first wall 111, and the separator 7 may be of a plate-shaped structure. As an example, the second insulating member 5 serves as the separator 7.

The venting channel 8 refers to a channel that can guide the gas in the battery cell 10 to the pressure relief mechanism 6 when the battery cell 10 undergoes thermal runaway. The venting channel 8 is disposed on the separator 7, the venting channel 8 may be a channel that directly guides the gas in the battery cell 10 to the pressure relief mechanism 6, or the venting channel 8 may also be a channel that indirectly guides the gas in the battery cell 10 to the pressure relief mechanism 6. The venting channel 8 may be a venting groove disposed on a surface of the separator 7. The venting groove may be disposed on a surface of the separator 7 facing the first wall 111, or may be disposed on a surface of the separator 7 facing the electrode assembly 2. The venting channel 8 may also be a through hole passing through the separator 7 in the thickness direction of the separator 7. The venting channel 8 may also be a channel formed inside the separator 7.

The heat-resistant part 711 is a part of the separator 7 with a melting point greater than 250 °C. The situation may be that the entire separator 7 is the heat-resistant part 711, or that only a part of the separator 7 is the heat-resistant part 711. It can be understood that a part of the separator 7 has a melting point greater than 250 °C, and the rest of the separator has a melting point less than or equal to 250 °C. One or a plurality of heat-resistant parts 711 may be provided in the separator 7. The melting point of the heat-resistant part 711 may be 251 °C, 260 °C, 270 °C, 304.4 °C, 327 °C, 340 °C, 488 °C, 500 °C, 600 °C, 700 °C, 1083.4 °C, 1534.8 °C, or the like.

In this embodiment, the separator 7 is disposed between the first wall 111 of the shell 1 and the electrode assembly 2, and the separator 7 is provided with the venting channel 8. At the initial stage of thermal runaway of the battery cell 10, the electrode assembly 2 generates gas and heat, and the gas in the battery cell 10 can be guided to the pressure relief mechanism 6 through the venting channel 8. In the process of the electrode assembly 2 generating gas and heat, the temperature of the battery cell 10 rises continuously, such that some components in the battery cell 10 melt and are present in a molten state. Since at least a part of the separator 7 is a heat-resistant part 711 with a melting point greater than 250 °C, the heat-resistant part 711 can withstand the high temperature inside the battery cell 10 and remain solid, so as to provide an isolation effect between the electrode assembly 2 and the first wall 111. In this way, the original venting channel 8 can be maintained between the electrode assembly 2 and the first wall 111, or a new venting channel can be formed due to the melting of a part of the separator 7, thus guiding the gas in the battery cell 10 to the pressure relief mechanism 6. The battery cell 10 reduces the risk that the gas in the battery cell 10 cannot be guided to the pressure relief mechanism 6, and improves the reliability of the battery 100.

In some embodiments, the entire separator 7 is the heat-resistant part 711.

It can be understood that the melting point of any part of the separator 7 is greater than 250 °C. It should be noted that the melting point of the heat-resistant part 711 being greater than 250 °C doesn't mean that the melting point of any region of the heat-resistant part 711 is limited to be the same. The situation may be that the heat-resistant part 711 includes a plurality of regions, the melting point of each region is greater than 250 °C, and the melting points of two regions may be the same or different.

By configuring the entire separator 7 as the heat-resistant part 711, when high temperature and high pressure are generated inside the battery cell 10 due to thermal runaway, the separator 7 can maintain the original form, thereby ensuring that the venting channel 8 remains unobstructed, and reducing the risk of explosion and fire of the battery cell 10 caused by the blockage of the venting channel 8.

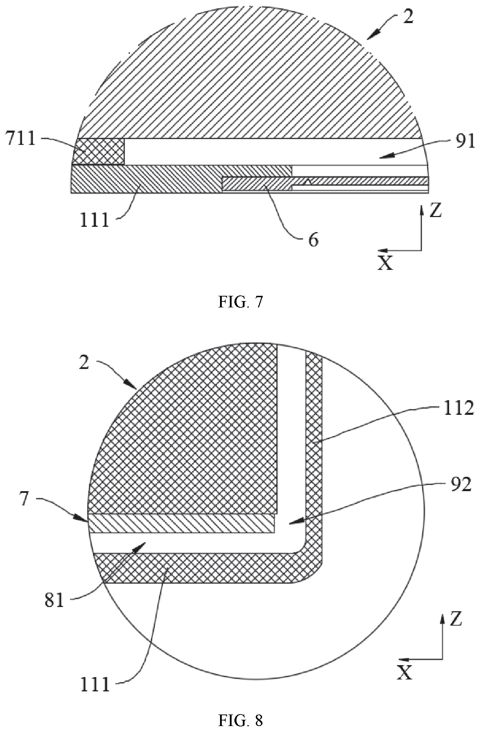

In some embodiments, referring to FIGs. 6 and 7, FIG. 7 is a schematic structural diagram of the battery cell 10 (after a non-heat-resistant part 712 is melted) shown in FIG. 5. One part of the separator 7 is the heat-resistant part 711, and the other part of the separator is the non-heat-resistant part 712 with a melting point less than or equal to 250 °C. The heat-resistant part 711 is configured to form a venting gap 91 in communication with the pressure relief mechanism 6 between the electrode assembly 2 and the first wall 111 after the non-heat-resistant part 712 is melted.

The part of the separator 7 other than the heat-resistant part 711 is the non-heat-resistant part 712. That is, the separator 7 includes a part with a melting point less than or equal to 250 °C, and this part is the non-heat-resistant part 712. It can be understood that the melting point of the heat-resistant part 711 is higher than the melting point of the non-heat-resistant part 712. As an example, the material of the heat-resistant part 711 is different from the material of the non-heat-resistant part 712. The non-heat-resistant part 712 may be made of polyethylene, polypropylene, polycarbonate, or the like, and the heat-resistant part 711 may be made of metal, ceramic, mica, polyimide, soluble polytetrafluoroethylene, or the like. The venting channel 8 may be formed in the heat-resistant part 711 or in the non-heat-resistant part 712, or the heat-resistant part 711 and the non-heat-resistant part 712 may jointly define the venting channel 8.

The venting gap 91 refers to a channel that can guide the gas in the battery cell 10 to the pressure relief mechanism 6 after the non-heat-resistant part 712 of the separator 7 is melted. If the venting channel 8 is disposed in the non-heat-resistant part 712, the venting channel 8 disappears after the non-heat-resistant part 712 is melted. If the venting channel 8 is disposed in the heat-resistant part 711, the venting channel 8 still exists on the separator 7 after the non-heat-resistant part 712 is melted, and the venting channel 8 may be in communication with the venting gap 91, or the venting channel 8 may be referred to as the venting gap 91.

During the thermal runaway of the battery cell 10, the non-heat-resistant part 712 may melt under the influence of the high temperature inside the battery cell 10, and the melted non-heat-resistant part 712 may be led out through the pressure relief mechanism 6 along with the airflow. The heat-resistant part 711 maintains the original form to continue to isolate the electrode assembly 2 from the first wall 111, and due to the melting of the non-heat-resistant part 712, the venting gap 91 in communication with the pressure relief mechanism 6 is newly added between the electrode assembly 2 and the first wall 111, such that the gas in the battery cell 10 can be continuously guided to the pressure relief mechanism 6 to be discharged out of the battery cell 10.

In some embodiments, with continued reference to FIG. 6, a plurality of heat-resistant parts 711 are provided, projections of the plurality of heat-resistant parts 711 are spaced apart from each other in the thickness direction of the first wall 111, and an edge of the projection of the separator 7 is spaced apart from the projection of each heat-resistant part 711.

The projections of the plurality of heat-resistant parts 711 being spaced apart from each other means that the plurality of heat-resistant parts 711 are not in contact with each other. After the non-heat-resistant part 712 of the separator 7 is melted, there is a gap between the plurality of heat-resistant parts 711, and the gap may serve as the venting gap 91.

The edge of the projection of the separator 7 being spaced apart from the projection of each heat-resistant part 711 means that there is a gap between the edge of the heat-resistant part 711 and the edge of the separator 7. That is, any position on the heat-resistant part 711 is located on the inner side of the separator 7 in the thickness direction of the first wall 111.

By allowing the plurality of heat-resistant parts 711 to be spaced apart from each other in the thickness direction of the first wall 111, after the non-heat-resistant part 712 of the separator 7 is melted, the venting gap 91 for guiding the gas in the battery cell 10 to the pressure relief mechanism 6 may be formed between the plurality of heat-resistant parts 711. The edge of the projection of the separator 7 is spaced apart from the projection of each heat-resistant part 711. If the heat-resistant parts 711 are disposed at the edge of the separator 7, during the melting of the non-heat-resistant part 712, the heat-resistant parts 711 are prone to drift to the edge of the electrode assembly 2, such that the projections of the heat-resistant parts 711 do not overlap with the projection of the electrode assembly 2 in the thickness direction of the first wall 111, and thereby the electrode assembly 2 becomes in contact with the first wall 111 to block the venting gap 91, which increases the risk of explosion and fire of the battery cell 10.

In some embodiments, the projection area of the heat-resistant part 711 is smaller than the projection area of the separator 7 in the thickness direction of the first wall 111.

After the non-heat-resistant part 712 of the separator 7 is heated and melted, the region where the non-heat-resistant part 712 previously occupies before being melted forms a new venting gap 91 between the electrode assembly 2 and the first wall 111. The projection area of the heat-resistant part 711 is smaller than the projection area of the separator 7 in the thickness direction of the first wall 111, such that the projection area of the venting gap 91 is increased, which is more conducive to the flow of the gas in the battery cell 10 to the pressure relief mechanism 6.

In some embodiments, the projection area of the heat-resistant part 711 is S₁, the projection area of the separator 7 is S₂, and 0.2 ≤ S₁/S₂ ≤ 0.8 is satisfied.

If one heat-resistant part 711 is provided, S₁ is the projection area of the heat-resistant part 711. If a plurality of heat-resistant parts 711 are provided, S₁ is the sum of the projection areas of the plurality of heat-resistant parts 711.

S₁/S₂ may be any one point value of 0.2, 0.3, 0.4, 0.5, 0.6, 0.7, and 0.8, or a value in a range defined by any two of the point values.

When S₁/S₂ ≥ 0.2, the supporting effect of the heat-resistant part 711 on the electrode assembly 2 can be improved, and the risk of the heat-resistant part 711 penetrating into the electrode assembly 2 due to a small volume can be reduced. When S₁/S₂ ≤ 0.8, the venting gap 91 formed between the electrode assembly 2 and the first wall 111 is not too small, and the venting efficiency of the venting gap 91 is improved. In this way, the supporting capacity and the venting capacity of the separator 7 are balanced.

In some embodiments, in the thickness direction of the first wall 111, the thickness of the heat-resistant part 711 is L1, and the thickness of the separator 7 is L₂, and 0.2 ≤ L₁/L₂ ≤ 0.8 is satisfied.

The thickness of the heat-resistant part 711 refers to the maximum thickness of the heat-resistant part 711 in the thickness direction of the first wall 111.

The thickness of the separator 7 refers to the maximum thickness of the separator 7 in the thickness direction of the first wall 111 before the non-heat-resistant part 712 of the separator 7 is melted.

L₁/L₂ may be any one point value of 0.2, 0.3, 0.4, 0.5, 0.6, 0.7, and 0.8, or a value in a range defined by any two of the point values.

By setting L₁/L₂ ≥ 0.2, after the non-heat-resistant part 712 of the separator 7 is melted, the heat-resistant part 711 can prevent the venting gap 91 formed between the electrode assembly 2 and the first wall 111 from being too small, thereby improving the venting efficiency of the venting gap 91; in the case that L₁/L₂ ≤ 0.8, the usage amount of the heat-resistant part 711 is reduced, and the cost is saved, thereby balancing the venting capacity and economy of the separator 7.

It should be noted that, in the thickness direction of the first wall 111, on the premise that the ratio of the area of the heat-resistant part 711 to the area of the separator 7 satisfies that 0.2 ≤ S₁/S₂ ≤ 0.8, the ratio of the thickness of the heat-resistant part 711 to the thickness of the separator 7 may satisfy that 0.2 ≤ L₁/L₂ ≤ 0.8.

In some embodiments, referring to FIG. 8, FIG. 8 is a partially enlarged view of region B in FIG. 4. The shell 1 is further provided with a second wall 112 adjacent to the first wall 111, the separator 7 is plate-shaped, and a first gap 92 is formed between the edge of the separator 7 and an inner surface of the second wall 112; the venting channel 8 includes a first venting channel 81, the first venting channel 81 extends to the edge of the separator 7, and the first venting channel 81 is in communication with the first gap 92.

The second wall 112 refers to a wall on the shell 1 adjacent to the first wall 111. One wall on the shell 1 adjacent to the first wall 111 may be the second wall 112, or a plurality of walls on the shell 1 adjacent to the first wall 111 may all be the second walls 112. As an example, as shown in FIG. 8, the shell 1 has an opening 1a formed at one end and is in a rectangular parallelepiped shape, the first wall 111 is a wall of the shell body 11 of the shell 1 opposite to the opening 1a, and the second wall 112 is a wall of the shell body 11 adjacent to the opening 1a. The first wall 111 may also be a wall adjacent to the opening 1a, and the second wall 112 may be the end cover 12 or a wall of the shell body 11 opposite to the opening 1a.

The first gap 92 refers to a gap between the second wall 112 and the separator 7 that allows gas to pass, and one or a plurality of first gaps 92 may be provided. As an example, the first wall 111 is a wall on the shell body 11 opposite to the opening 1a, the first wall 111 is a wall on the shell body 11 adjacent to the opening 1a, the separator 7 is disposed on the first wall 111, and the first gap 92 is formed between the second wall 112 and the separator 7.

The first venting channel 81 refers to a channel that is disposed on the separator 7 and can guide the gas in the battery cell 10 to the pressure relief mechanism 6. The first venting channel 81 may be disposed on two surfaces of the separator 7 in the thickness direction of the first wall 111, or the first venting channel 81 may penetrate through the separator 7, and the first venting channel 81 is in communication with the first gap 92.

By providing the first gap 92, the gas in the battery cell 10 can flow to the first venting channel 81 through the first gap 92, such that the gas can be guided to the pressure relief mechanism 6 to be discharged out of the shell 1.

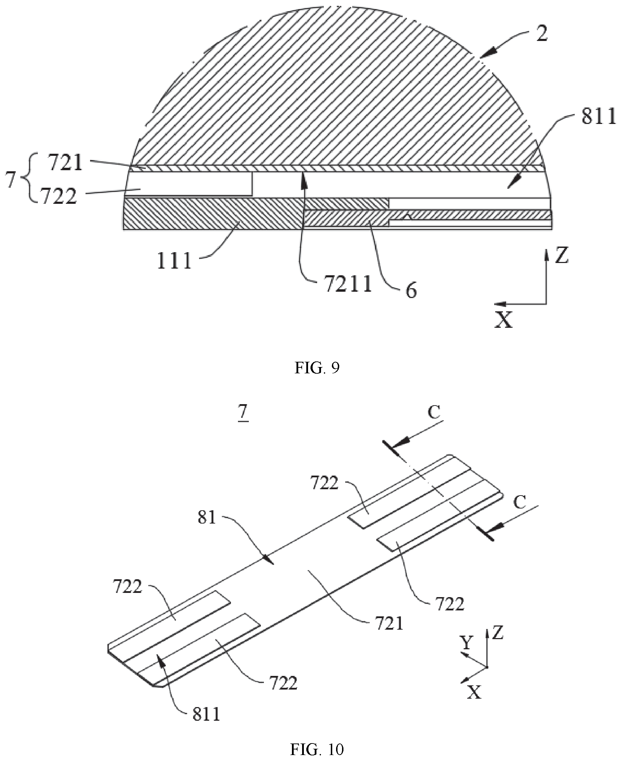

In some embodiments, referring to FIGs. 9 and 10, FIG. 9 is a partial schematic diagram of a battery cell 10 according to some embodiments of the present application, and FIG. 10 is a schematic structural diagram of a separator 7 in FIG. 9. The separator 7 includes a body 721 and a protrusion 722, the body 721 has a first surface 7211 facing the first wall 111, and the protrusion 722 protrudes from the first surface 7211, such that a second gap 811 of the first venting channel 81 is formed between the first surface 7211 and the first wall 111.

The protrusion 722 may be of a plate-shaped structure, or the protrusion 722 may be of a strip-shaped structure. The protrusion 722 protrudes from the body 721, the protrusion 722 may be bonded to the body 721, or the protrusion 722 may be integrally formed with the body 721. The projection area of the protrusion 722 is less than the projection area of the body 721 in the thickness direction of the first wall 111. A part of the protrusion 722 may be the heat-resistant part 711, or the entire protrusion may be the heat-resistant part 711, or the entire protrusion may be the non-heat-resistant part 712. A part of the body 721 may be the heat-resistant part 711, or the entire body may be the heat-resistant part 711, or the entire body may be the non-heat-resistant part 712. As an example, the body 721 is the non-heat-resistant part 712, the entire protrusion 722 is the heat-resistant part 711, and a second gap 811 is formed between the body 721, the protrusion 722, and the first wall 111.

The second gap 811 refers to a channel for discharging gas formed between the body 721, the protrusion 722, and the first wall 111, and the second gap 811 is in communication with the first gap 92.

By disposing the protrusion 722 between the body 721 and the first wall 111, the protrusion 722 separates the body 721 from the first wall 111 to maintain the second gap 811, and the first gap 92 is in communication with the first gap 92, such that the gas in the battery cell 10 can be guided to the second gap 811 through the first gap 92 and then flows to the pressure relief mechanism 6.

In some embodiments, the projection of the protrusion 722 does not overlap with the projection of the pressure relief mechanism 6 in the thickness direction of the first wall 111.

In the thickness direction of the first wall 111, when the pressure relief mechanism 6 is located on the second wall 112, the projection of the pressure relief mechanism 6 does not overlap with the projection of the protrusion 722; when the pressure relief mechanism 6 is located on the first wall 111, in the thickness direction of the first wall 111, the protrusion 722 is located between the pressure relief mechanism 6 and the body 721. The projection of the protrusion 722 not overlapping with the projection of the pressure relief mechanism 6 means that the protrusion 722 can abut against the first wall 111 and the body 721 without being in contact with the pressure relief mechanism 6.

By allowing the projection of the protrusion 722 not to overlap with the projection of the pressure relief mechanism 6 in the thickness direction of the first wall 111, when the pressure relief mechanism 6 is located on the first wall 111, such a design facilitates effective support of the separator 7 by the first wall 111 while the separator 7 supports the electrode assembly 2, thereby reducing the risk of affecting the normal operation of the pressure relief mechanism 6 due to the separator 7 abutting against the pressure relief mechanism 6. The design that the protrusion 722 does not overlap with the pressure relief mechanism 6 helps to reduce the risk of affecting the venting effect due to the blockage of the venting port of the pressure relief mechanism 6 by the protrusion 722.

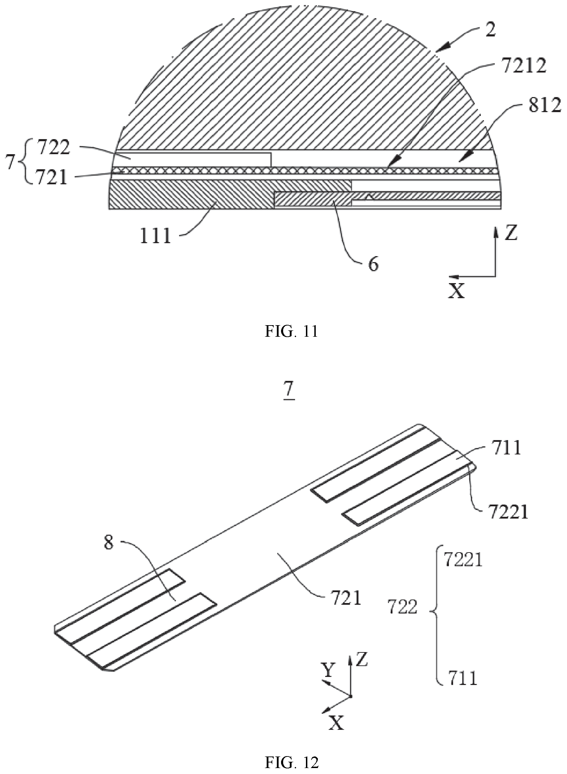

In some embodiments, referring to FIG. 11, FIG. 11 is a partial schematic diagram of a battery cell 10 according to yet some other embodiments of the present application. The separator 7 includes a body 721 and a protrusion 722, the body 721 has a second surface 7212 facing the electrode assembly 2, and the protrusion 722 protrudes from the second surface 7212, such that a third gap 812 serving as the first venting channel 81 is formed between the second surface 7212 and the electrode assembly 2.

The third gap 812 refers to a gap formed between the body 721, the protrusion 722, and the electrode assembly 2 in the case that the protrusion 722 is located between the body 721 and the electrode assembly 2, and the third gap 812 is in communication with the first gap 92.

By disposing the protrusion 722 between the electrode assembly 2 and the body 721, the third gap 812 is located between the electrode assembly 2 and the body 721. In this way, gas on a side of the electrode assembly 2 facing the body 721 may be directly guided to the pressure relief mechanism 6 through the third gap 812, thus establishing a flow path of gas.

It should be noted that, in the case that the protrusion 722 is disposed between the electrode assembly 2 and the body 721, the protrusion 722 may also be disposed between the body 721 and the first wall 111. The third gap 812 serving as the first venting channel 81 is formed between the body 721 and the electrode assembly 2, the second gap 811 serving as the first venting channel 81 is formed between the body 721 and the first wall 111, and the second gap 811 and the third gap 812 together serve as a part of the first venting channel 81 to guide the gas generated by the electrode assembly 2 to the pressure relief mechanism 6.

In some embodiments, a plurality of protrusions 722 are provided, and the plurality of protrusions 722 are spaced apart from each other.

A plurality of protrusions 722 may be disposed on the first surface 7211 of the body 721, or a plurality of protrusions 722 may be disposed on the second surface 7212 of the body 721, or a plurality of protrusions 722 may be disposed on both the first surface 7211 and the second surface 7212 of the body 721. The plurality of protrusions 722 are independent of each other, and the protrusions 722 are not in contact with each other.

By providing the plurality of protrusions 722, the separator 7 is more stably disposed between the first wall 111 and the electrode assembly 2, and the separator 7 may support the electrode assembly 2 to make the electrode assembly 2 more stable in the shell 1.

In some embodiments in which the separator 7 is provided with the body 721 and the protrusion 722, both the first surface 7211 and the second surface 7212 of the body 721 may be provided with a plurality of protrusions 722, and the second gap 811 and the third gap 812 are formed. The second gap 811 and the third gap 812 are each in communication with the first gap 92.

In some embodiments, referring to FIG. 12, FIG. 12 is a schematic structural diagram of a separator 7 according to some embodiments of the present application. At least a part of the protrusion 722 is the heat-resistant part 711.

At least a part of the protrusion 722 being the heat-resistant part 711 means that the entire protrusion 722 may be the heat-resistant part 711, or that one part of the protrusion 722 may be the heat-resistant part 711 while the other part may be the non-heat-resistant part 712. As an example, one part of the protrusion 722 is the heat-resistant part 711, and the other part of the protrusion 722 is the non-heat-resistant part 712. After the non-heat-resistant part 712 of the protrusion 722 is melted, the heat-resistant part 711 of the protrusion 722 remains between the electrode assembly 2 and the first wall 111, and the venting gap 91 may be formed between the electrode assembly 2, the first wall 111, and the heat-resistant part 711 of the protrusion 722.

During the process of the gas in the battery cell 10 passing through the venting channel 8, the protrusion 722 may maintain the isolation between the electrode assembly 2 and the first wall 111, thereby ensuring that the venting channel 8 is unobstructed and is of a certain size.

In some embodiments, the melting point of the heat-resistant part 711 is higher than the melting point of the body 721.

The body 721 is a non-heat-resistant part 712, and the melting point of the body 721 is less than or equal to 250 °C. On the premise that the body 721 is the non-heat-resistant part 712, one part of the protrusion 722 may be the heat-resistant part 711 while the other part may be the non-heat-resistant part 712, or the entire protrusion 722 may be the heat-resistant part 711.

On the premise that at least a part of the protrusion 722 is the heat-resistant part 711, the melting point of the heat-resistant part 711 of the heat-resistant part 711 is higher than the melting point of the body 721, such that the protrusion 722 can maintain the isolation between the electrode assembly 2 and the first wall 111 before the body 721 melts, thereby reducing the risk of affecting the normal venting of the venting channel 8 due to disappearance of the second gap 811 or the third gap 812 caused by the melting of the protrusion 722 before the body 721.

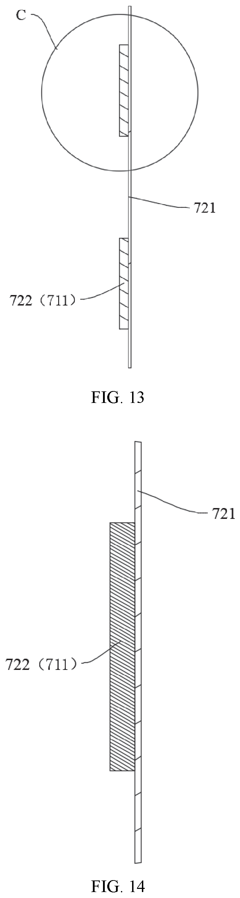

In some embodiments, referring to FIGs. 13 and 14, FIG. 13 is a cross-sectional view of the separator 7 in FIG. 10 along line A-A, and FIG. 14 is a partially enlarged view of region C in FIG. 13. The entire protrusion 722 is the heat-resistant part 711.

When the entire protrusion 722 is the heat-resistant part 711, the entire body 721 may be the heat-resistant part 711 or the non-heat-resistant part 712, or one part of the body 721 may be the heat-resistant part 711 while the other part may be the non-heat-resistant part 712.

By configuring the entire protrusion 722 as the heat-resistant part 711, the protrusion 722 can maintain the original height of the second gap 811 or the third gap 812 in the thickness direction of the first wall 111, thereby ensuring that the venting channel 8 is unobstructed.

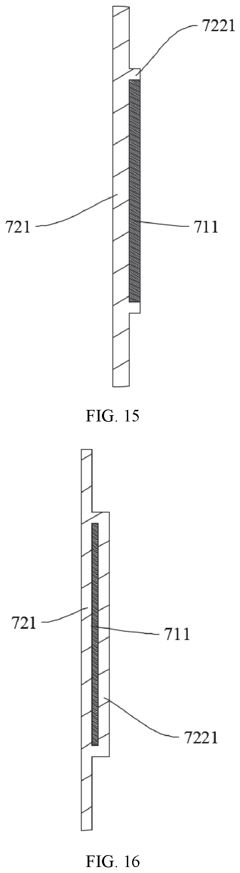

In some embodiments, referring to FIGs. 15 and 16, FIG. 15 is a partial schematic diagram of a separator 7 according to some embodiments of the present application, and FIG. 16 is a partial schematic diagram of a separator 7 according to yet some other embodiments of the present application. One part of the protrusion 722 is the heat-resistant part 711, and the other part is integrally formed with the body 721 and wraps the heat-resistant part 711.

The situation may be that the non-heat-resistant part 712 of the protrusion 722 and the body 721 completely wrap the heat-resistant part 711 of the protrusion 722 after being integrally formed, or the non-heat-resistant part 712 of the protrusion 722 and the body 721 may partially wrap the heat-resistant part 711 of the protrusion 722 after being integrally formed. In some embodiments, as shown in FIG. 15, one part of the protrusion 722 is the heat-resistant part 711, and the other part is a connecting part 7221, the connecting part 7221 and the body 721 are integrally formed, a part of the protrusion 722 is wrapped in the connecting part 7221, and both the body 721 and the connecting part 7221 are the non-heat-resistant part 712. In some other embodiments, as shown in FIG. 16, one part of the protrusion 722 is the heat-resistant part 711, the other part is the connecting part 7221, the connecting part 7221 and the body 721 are integrally formed, the entire protrusion 722 is wrapped in the connecting part 7221, and both the body 721 and the connecting part 7221 are the non-heat-resistant part 712.

By allowing a part of the protrusion 722 to be integrally formed with the body 721 and wrap the heat-resistant part 711 of the protrusion 722, the connection between the protrusion 722 and the body 721 is more stable.

In some embodiments, one part of the body 721 is the heat-resistant part 711.

When one part of the body 721 is the heat-resistant part 711, the other part of the body 721 is the non-heat-resistant part 712, a part of the protrusion 722 may be the heat-resistant part 711, or the entire protrusion may be the heat-resistant part 711, or the entire protrusion may be the non-heat-resistant part 712.

Such a design helps to form a new venting gap 91 by the heat-resistant part 711 of the body 721 after the non-heat-resistant part 712 of the body 721 is melted, such that the gas in the battery cell 10 can be continuously guided to the pressure relief mechanism 6.

In some embodiments, the body 721 is made of an insulating material.

The body 721 is made of an insulating material with a part of the body being the heat-resistant part 711; for example, the body 721 may be made of soluble polytetrafluoroethylene. The body 721 may also be made of an insulating material with the entire body being the non-heat-resistant part 712, and the body 721 may be made of ceramic, polyethylene, polyimide, or other materials. The protrusion 722 may be made of an insulating material or a conductor. As an example, the body 721 is made of polyethylene, the protrusion 722 is made of a metallic material, and the metal may be copper, aluminum, or other metal materials.

Such a design helps to insulate and isolate the electrode assembly 2 from the shell 1.

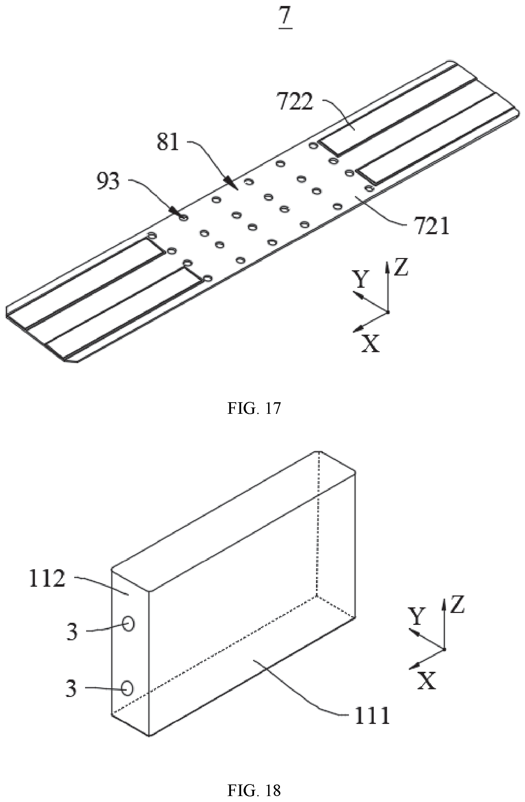

In some embodiments, referring to FIG. 17, FIG. 17 is a schematic structural diagram of a separator 7 according to yet some other embodiments of the present application. The venting channel 8 further includes a through hole 93 disposed on the body 721, and the through hole 93 is connected to the first venting channel 81.

The through hole 93 may be a hole penetrating through the first surface 7211 and the second surface 7212, or the through hole may also be a hole located between the first surface 7211 and the second surface 7212. The through hole 93 penetrates through the body 721 and is in communication with the first venting channel 81. The through hole 93 may be directly in communication with the first venting channel 81, or may be indirectly in communication with the first venting channel 81 through the first gap 92. As an example, there are a plurality of through holes 93, and the plurality of through holes 93 are disposed on the separator 7 and penetrate through the first surface 7211 and the second surface 7212.

By disposing the through hole 93 on the body 721, the gas generated by the electrode assembly 2 can be guided to the first venting channel 81 through the through hole 93 and thereby to be in communication with the pressure relief mechanism 6. This increases the path for gas flow.

In some embodiments, the pressure relief mechanism 6 is disposed on the first wall 111.

The pressure relief mechanism 6 is disposed on the first wall 111, the separator 7 is disposed on the first wall 111, the pressure relief mechanism 6 is disposed proximal to the venting channel 8, and the separator 7 isolates the pressure relief mechanism 6 from the electrode assembly 2.

By disposing the pressure relief mechanism 6 on the first wall 111, the separator 7 is located between the electrode assembly 2 and the pressure relief mechanism 6. In the case of thermal runaway, the heat-resistant part 711 of the separator 7 maintains a gap between the pressure relief mechanism 6 and the electrode assembly 2, thereby providing a channel for guiding the gas in the battery cell 10 to the pressure relief mechanism 6.

In some embodiments, referring to FIG. 18, FIG. 18 is a schematic structural diagram of a battery cell 10 according to still some other embodiments of the present application. The battery cell 10 includes an electrode terminal 3, the shell 1 is provided with a second wall 112 adjacent to the first wall 111, and the electrode terminal 3 is disposed on the second wall 112.

The second wall 112 is a wall adjacent to the first wall 111. When the first wall 111 is a wall of the shell body 11 opposite to the opening 1a, the second wall 112 may be a wall of the shell body 11 adjacent to the opening 1a. When the first wall 111 is a wall of the shell body 11 adjacent to the opening 1a, the second wall 112 may be an end cover 12 or a wall of the shell body 11 opposite to the opening 1a. The first wall 111 and the second wall 112 are disposed adjacent to each other. That is, the electrode terminal 3 is disposed adjacent to the pressure relief mechanism 6. A plurality of second walls 112 may be provided, two electrode terminals 3 may be provided, and the two electrode terminals 3 may be disposed on different second walls 112. As an example, the first wall 111 is a wall of the shell body 11 opposite to the opening 1a, the second wall 112 is a wall of the shell body 11 adjacent to the opening 1a, and the electrode terminal 3 is disposed on the second wall 112.

In some embodiments, the separator 7 is a bottom support plate.

By disposing the electrode terminal 3 adjacent to the pressure relief mechanism 6, the influence of the pressure relief mechanism 6 on the electrode terminal 3 during pressure relief is reduced.

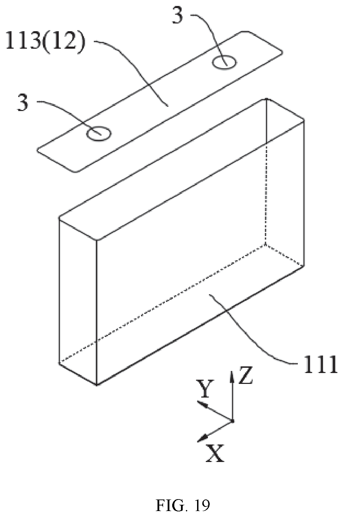

In some embodiments, referring to FIG. 19, FIG. 19 is a schematic structural diagram of a shell 1 according to some embodiments of the present application. The battery cell 10 includes an electrode terminal 3, the shell 1 is provided with a third wall 113 opposite to the first wall 111, and the electrode terminal 3 is disposed on the third wall 113.

The electrode terminal 3 and the pressure relief mechanism 6 are disposed on different walls of the shell 1 and are directly opposite to each other. As an example, the first wall 111 is a wall of the shell body 11 opposite to the opening 1a, the third wall 113 is an end cover 12, and the electrode terminal 3 is disposed on the end cover 12.

By disposing the electrode terminal 3 opposite to the pressure relief mechanism 6, the influence of the pressure relief mechanism 6 on the electrode terminal 3 during pressure relief is reduced.

In some embodiments, the first wall 111 is oriented downward when the battery cell 10 is placed in an electric device or a battery 100.

The first wall 111 being oriented downward means that the pressure relief mechanism 6 is oriented downward, which means that when the battery cell 10 is actually used, the first wall 111 is oriented in the direction of gravity.

By orienting the pressure relief mechanism 6 downward, the pressure relief mechanism 6 vents gas downward, which reduces the influence of pressure relief of the pressure relief mechanism 6 on other components located above the pressure relief mechanism 6 when the battery cell 10 is applied to the electric device or the battery 100.

In some embodiments, the shell 1 includes a shell body 11 and an end cover 12, the shell body 11 includes a bottom wall and a side wall, the side wall is disposed in an enclosing manner around the bottom wall, one end of the side wall is connected to the bottom wall, the other end of the side wall forms an opening 1a, the opening 1a is lidded with the end cover 12, and the first wall 111 is the bottom wall.

When the first wall 111 is the bottom wall, the separator 7 is disposed on the bottom wall, and the pressure relief mechanism 6 may be disposed on the side wall, the end cover 12, or the bottom wall. As an example, the pressure relief mechanism 6 is disposed on the bottom wall, the electrode terminal 3 is disposed on the end cover 12, and the separator 7 is disposed between the pressure relief mechanism 6 and the electrode assembly 2.

By disposing the separator 7 between the electrode assembly 2 and the first wall 111 serving as the bottom wall, the separator 7 can maintain the support for the electrode assembly 2. In the case of thermal runaway, the heat-resistant part 711 of the separator 7 can maintain the support for the electrode assembly 2, thereby providing a channel for guiding the gas to the pressure relief mechanism 6.

In some embodiments, the heat-resistant part 711 is made of metal, ceramic, mica, polyimide, or soluble polytetrafluoroethylene.

According to some embodiments of the present application, the present application provides a battery cell 10. The battery cell 10 includes an electrode terminal 3, an electrode assembly 2, a first insulating member 4, a separator 7, a pressure relief mechanism 6, and a shell 1. The shell 1 includes a shell body 11 and an end cover 12. The shell body 11 is lidded with the end cover 12. The electrode terminal 3 is disposed on the end cover 12, the electrode assembly 2, the first insulating member 4, and the separator 7 are disposed in the shell body 11, the electrode assembly 2 is wrapped in the first insulating member 4, the shell body 11 is provide with a first wall 111 opposite to the end cover 12, the separator 7 is disposed between an insulating film and the first wall 111, and the pressure relief mechanism 6 is disposed on the first wall 111. The separator 7 includes a body 721 and a protrusion 722. The protrusion 722 is disposed between the body 721 and the first wall 111, the body 721 is connected to the insulating member, and a second gap 811 serving as a first venting channel 81 is formed between the body 721, the protrusion 722, and the first wall 111. The shell body 11 is provided with four second walls 112 adjacent to the first wall 111, the four second walls 112 are all spaced apart from the body 721 to form a first gap 92, the first gap 92 is in communication with the second gap 811, and the gas in the battery cell 10 can be guided to the second gap 811 through the first gap 92 and then guided to the pressure relief mechanism 6 through the second gap 811. The body 721 is further provided with a through hole 93 penetrating through the body 721 in the thickness direction of the first wall 111, the through hole 93 is in communication with the second gap 811, and the through hole 93 is configured to guide the gas to the second gap 811.

It should be noted that unless conflicting, the embodiments and features of the embodiments in the present application may be combined with each other.

It should be noted that unless conflicting, the embodiments and features of the embodiments in the present application may be combined with each other. The above are only preferred embodiments of the present application and are not intended to limit the present application. For those skilled in the art, the present application can be modified and varied. Any modification, equivalent substitution, improvement, and the like made within the spirit and principle of the present application shall all fall within the protection scope of the present application.

## Claims

1. A battery cell, comprising:
a shell, provided with a first wall;
a pressure relief mechanism, disposed on the shell;
an electrode assembly, disposed in the shell; and
a separator, disposed between the electrode assembly and the first wall, wherein the separator is provided with a venting channel, and the venting channel is configured to guide gas in the battery cell to the pressure relief mechanism,
wherein at least a part of the separator is a heat-resistant part with a melting point greater than 250 °C.

2. The battery cell according to claim 1, wherein the entire separator is the heat-resistant part.

3. The battery cell according to claim 1, wherein one part of the separator is the heat-resistant part, and the other part of the separator is a non-heat-resistant part with a melting point less than 250 °C, wherein the heat-resistant part is configured to form, between the electrode assembly and the first wall, a venting gap in communication with the pressure relief mechanism after the non-heat-resistant part is melted.

4. The battery cell according to claim 3, wherein the separator comprises a plurality of heat-resistant parts, wherein projections of the plurality of heat-resistant parts are spaced apart from each other in a thickness direction of the first wall, and an edge of a projection of the separator is spaced apart from the projection of each heat-resistant part.

5. The battery cell according to claim 3 or 4, wherein a projection area of the heat-resistant part is smaller than a projection area of the separator in the thickness direction of the first wall.

6. The battery cell according to claim 5, wherein the projection area of the heat-resistant part is S1, the projection area of the separator is S2, and 0.2 ≤ S1/S2 ≤ 0.8 is satisfied.

7. The battery cell according to any one of claims 3 to 5, wherein in the thickness direction of the first wall, a thickness of the heat-resistant part is L1, a thickness of the separator is L2, and 0.2 ≤ L1/L2 ≤ 0.8 is satisfied.

8. The battery cell according to any one of claims 1 and 3 to 7, wherein:
the shell is further provided with a second wall adjacent to the first wall, the separator is plate-shaped, and a first gap is formed between an edge of the separator and an inner surface of the second wall; and
the venting channel comprises a first venting channel, wherein the first venting channel extends to the edge of the separator, and the first venting channel is in communication with the first gap.

9. The battery cell according to claim 8, wherein the separator comprises a body and a protrusion, wherein the body has a first surface facing the first wall, and the protrusion protrudes from the first surface, such that a second gap of the first venting channel is formed between the first surface and the first wall.

10. The battery cell according to claim 9, wherein a projection of the protrusion does not overlap with a projection of the pressure relief mechanism in the thickness direction of the first wall.

11. The battery cell according to claim 8, wherein the separator comprises a body and a protrusion, wherein the body has a second surface facing the electrode assembly, and the protrusion protrudes from the second surface, such that a third gap serving as the first venting channel is formed between the second surface and the electrode assembly.

12. The battery cell according to any one of claims 9 to 11, wherein the separator comprises a plurality of protrusions, and the plurality of protrusions are spaced apart from each other.

13. The battery cell according to any one of claims 9 to 11, wherein at least a part of the protrusion is the heat-resistant part.

14. The battery cell according to claim 13, wherein the melting point of the heat-resistant part is higher than a melting point of the body.

15. The battery cell according to claim 13 or 14, wherein the entire protrusion is the heat-resistant part.

16. The battery cell according to claim 13 or 14, wherein one part of the protrusion is the heat-resistant part, and the other part of the protrusion is integrally formed with the body and wraps the heat-resistant part.

17. The battery cell according to any one of claims 9 to 11, wherein a part of the body is the heat-resistant part.

18. The battery cell according to any one of claims 9 to 11, wherein the body is made of an insulating material.

19. The battery cell according to any one of claims 9 to 18, wherein the venting channel further comprises a through hole disposed on the body, and the through hole is connected to the first venting channel.

20. The battery cell according to any one of claims 1 to 19, wherein the pressure relief mechanism is disposed on the first wall.

21. The battery cell according to claim 20, wherein the battery cell comprises an electrode terminal, and the shell is provided with a second wall adjacent to the first wall, wherein the electrode terminal is disposed on the second wall.

22. The battery cell according to claim 20, wherein the battery cell comprises an electrode terminal, and the shell is provided with a third wall opposite to the first wall, wherein the electrode terminal is disposed on the third wall.

23. The battery cell according to any one of claims 1 to 22, wherein the first wall is oriented downward when the battery cell is placed in an electric device or a battery.

24. The battery cell according to any one of claims 1 to 23, wherein the shell comprises a shell body and an end cover, the shell body comprising a bottom wall and a side wall, wherein the side wall is disposed in an enclosing manner around the bottom wall, one end of the side wall is connected to the bottom wall, the other end of the side wall forms an opening, the opening is lidded with the end cover, and the first wall is the bottom wall.

25. The battery cell according to any one of claims 1 to 24, wherein the heat-resistant part is made of metal, ceramic, mica, polyimide, or soluble polytetrafluoroethylene.

26. A battery, comprising the battery cell according to any one of claims 1 to 25.

27. An electric device, comprising the battery cell according to any one of claims 1 to 25 or the battery according to claim 26, wherein the battery cell or the battery is configured to provide electric energy.
